# EUROPEAN PATENT SPECIFICATION

(11) **EP 1 195 883 B1**
(45) Date of publication and mention of the grant of the patent: **30.04.2014**
(21) Application number: 01660185.8
(22) Date of filing: 04.10.2001
(51) Int. Cl.: H02M 3/335

(54) **Control circuit for rectification**
Gleichrichtungssteuerschaltung
Circuit de commande de redressement

(30) Priority: 06.10.2000 FI 20002206
(43) Date of publication of application: 10.04.2002
(73) Proprietor: Salcomp Oyj, 24101 Salo (FI)
(72) Inventor: Koski, Ville, 24240 Salo (FI)
(74) Representative: Suominen, Kaisa Liisa

(56) References cited:
- EP-A- 0 529 180
- EP-A- 0 741 447
- DE-A- 3 422 777
- DE-A- 19 704 604
- US-A- 3 735 235
- US-A- 4 716 514
- US-A- 4 922 404
- US-A- 5 138 249
- US-A- 5 144 547
- US-A- 5 742 491
- US-A- 6 038 148
- US-A- 6 061 255
- US-A- 6 075 352
- US-A- 6 081 432
- PATENT ABSTRACTS OF JAPAN vol. 1997, no. 10, 31 October 1997 (1997-10-31) & JP 09 172775 A (FUJITSU DENSO LTD.), 30 June 1997 (1997-06-30)
- PATENT ABSTRACTS OF JAPAN vol. 1995, no. 08, 29 September 1995 (1995-09-29) & JP 07 115766 A (SHINDENGEN ELECTRIC MFG), 2 May 1995 (1995-05-02)
- PATENT ABSTRACTS OF JAPAN vol. 1998, no. 14, 31 December 1998 (1998-12-31) & JP 10 243647 A (SONY CORP.), 11 September 1998 (1998-09-11)
- PATENT ABSTRACTS OF JAPAN vol. 1999, no. 04, 30 April 1999 (1999-04-30) & JP 11 004577 A (FUJITSU LTD), 6 January 1999 (1999-01-06)
- PATENT ABSTRACTS OF JAPAN vol. 1997, no. 03, 31 March 1997 (1997-03-31) & JP 08 317639 A (OOHIRA DENSHI), 29 November 1996 (1996-11-29)
- PATENT ABSTRACTS OF JAPAN vol. 004, no. 109 (E-020), 6 August 1980 (1980-08-06) & JP 55 066281 A (NIPPON TELEGRAPH & TELEPHONE COMPANY), 19 May 1980 (1980-05-19)

## Description

The invention relates to power supply electronics.

Quality of electricity in combination with a light structure, especially in portable devices, are advantageous characteristics as far as the operation and convenience of use of an apparatus are concerned. Modern power supply design utilizing semiconductors in switch type applications can be realized reliably with a few components in order to produce good-quality electricity with good efficiency e.g. for digital circuits.

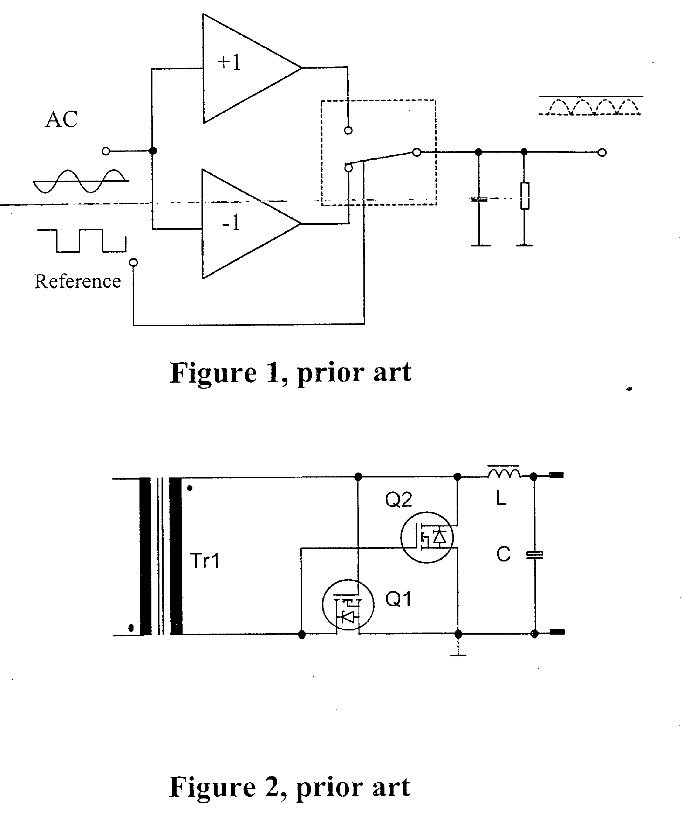

In electronics, it is generally known to use switched mode power supplies to generate a d.c. voltage. This method, however, involves some known disadvantages in certain applications. A known technique in building a switched mode power supply is to apply synchronous rectification the general principle of which is explained in Fig. 1 (Horowitz and Hill: The Art of Electronics, Cambridge University Press 1995, ISBN 0-521-37095-7). The principle in this method is to use two rectifiers the voltages of which are alternately switched on the basis of the phase of the half waves of the a.c. voltage rectified. Voltage from the switch is directed so as to be used in generating the output voltage of the power supply, which may include filtering of switching ripples, for example. Voltages from rectifiers are selected by a separate switch element which is generally advantageously implemented with a semiconductor.

There are, however, some problems associated with synchronous rectification. Nonlinearity of rectifier diodes may cause some headache in control design. Another potential problem relates to the generation of a coherent reference signal to control the switching elements. Especially one should take into account the special control characteristics at switching frequencies at which the switching times of the actual semiconductors used for rectification are quite long in proportion to the length of the effective duty cycle through the semiconductors.

In the simplest case, synchronous rectifier semiconductors can be controlled as shown in Fig. 2. Voltage obtained from power supply terminals is filtered by a conventional filter comprised of an inductance L and capacitance C. Switching transistors Q1 and Q2 are coupled by their drain electrodes to opposite ends of the secondary winding of a transformer and at the same time interconnected such that the drain of Q1 is coupled with the gate of Q2 and the drain of Q2 is coupled with the gate of Q1 (EP 0884829A1). It is also known to use separate pulse circuits to generate the gate control for Q1 and Q2. Examples of a control circuit for a synchronous rectifier are disclosed in EP 0741447, DE 19704604 and US 4922404.

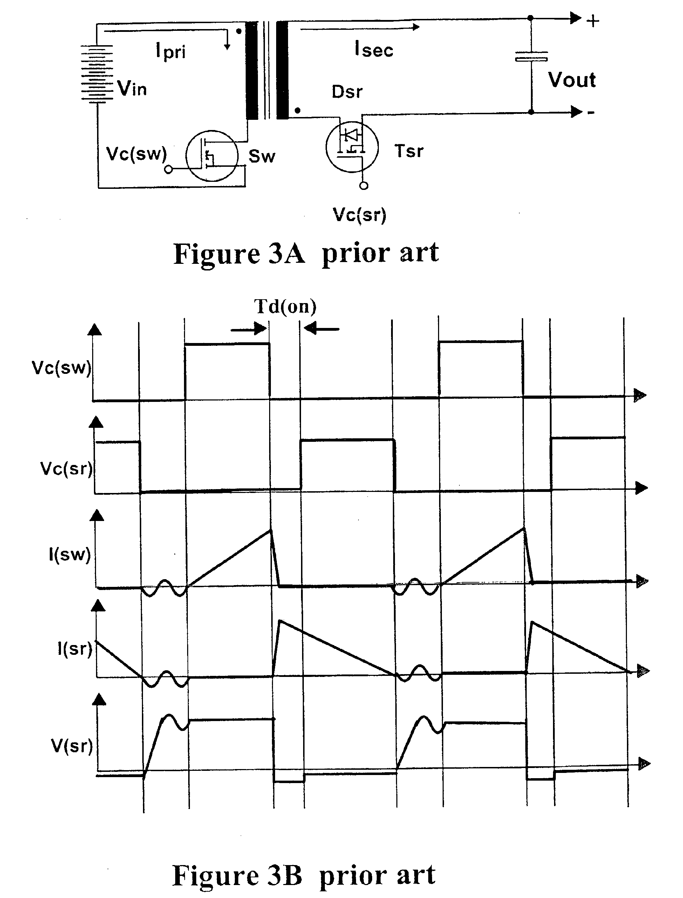

Fig. 3 shows a discontinuously conducting flyback-type converter circuit as well as voltages and currents typical of the circuit. Fig. 3 also shows the turn-on Td(on) and turn-off Td(off) times of the field-effect transistor, or FET, which times may result in considerable losses and, hence, increase power consumption also during unwanted periods (Tdon) of conduction of a body diode in the FET. Power losses related to oscillation, caused by transformer leakage inductance and capacitance between the FET's drain and source electrodes, may also increase power consumption.

An object of the invention is to improve synchronous rectifier control on the secondary side of a switched mode power supply.

The objects of the invention are achieved by a control circuit for the secondary current switch where the control signal depends on the derivative of the current flowing through the circuit to be controlled.

It is characteristic of the invention to generate a control signal for a secondary rectifier on the basis of the rate of change of the secondary current. The control signal generated is used to control switch elements which in turn regulate control pulses of a switch element connected in series with the load in the secondary so that the switching time of the switch element serving as the switch proper is taken into account and, thus, the efficiency is optimized.

It is characteristic of the invention to use in a power supply a control circuit which comprises at least one active semiconductor switch as well as switching and sensor means required for controlling it. The switching means characteristically comprise at least one coil in order to produce a voltage proportional to the secondary current. The voltage is used to generate a control signal to control the gate pulses of the semiconductor switch by means of another on/off type semiconductor switch.

The preferred embodiments of the invention disclosed here are a circuit according to claim 1 and a method according to claim 15 for controlling power supply switch components in synchronous secondary rectification. A control signal is generated by means of sensor elements on the basis of the rate of change of the current flowing through a circuit. The control signal is used to control a switching circuit which in turn can be used to regulate a control voltage coming to the switch component either directly as such or through adjusting the number and/or duration of control pulses coming to the switch component in a suitable phase via a transformer. Other factors, such as the operating temperature of an apparatus or part thereof, may also be taken into account in the generation of the control signal.

The invention also discloses a circuit well suited to synchronous secondary rectification, which circuit can be used to optimize the length of the conduction time of a switch component. In a case where the switch component is a FET the length of the conduction time can be adjusted by discharging the gate charge. The circuit can be utilized for reducing power loss in an apparatus and, thus, enhance its efficiency.

The invention is below described in closer detail, referring to the explanatory advantageous embodiments and to the accompanying drawings in which
Fig. 1 illustrates the known principle of synchronous rectification,
Fig. 2 shows a prior-art solution for generating gate control for switching transistors in a simple synchronous rectifier circuit,
Fig. 3A shows a flyback-type converter of discontinuous conduction,
Fig. 3B shows currents and voltages typical of the circuit of Fig. 3A,
Fig. 4 shows a schematic for controlling a secondary rectification circuit according to an advantageous embodiment of the invention,
Fig.5 shows a schematic for controlling a secondary rectification circuit according to an advantageous embodiment of the invention by means of an auxiliary winding,
Fig. 6A shows a circuit diagram of a secondary rectifier in accordance with an advantageous embodiment of the invention,
Fig. 6B shows a detail of Fig. 6A,
Fig. 7 shows a current flowing through a control choke as a function of time,
Fig. 8 shows a voltage measured across a synchronous control choke as a function of time,
Fig. 9 shows a transformer secondary voltage as a function of time,
Fig. 10 shows a voltage measured across a secondary rectifier FET as a function of time,
Fig. 11 shows a gate control pulse of a secondary rectifier FET as a function of time,
Fig. 12 shows a flow chart of a method for controlling a secondary rectifier FET.

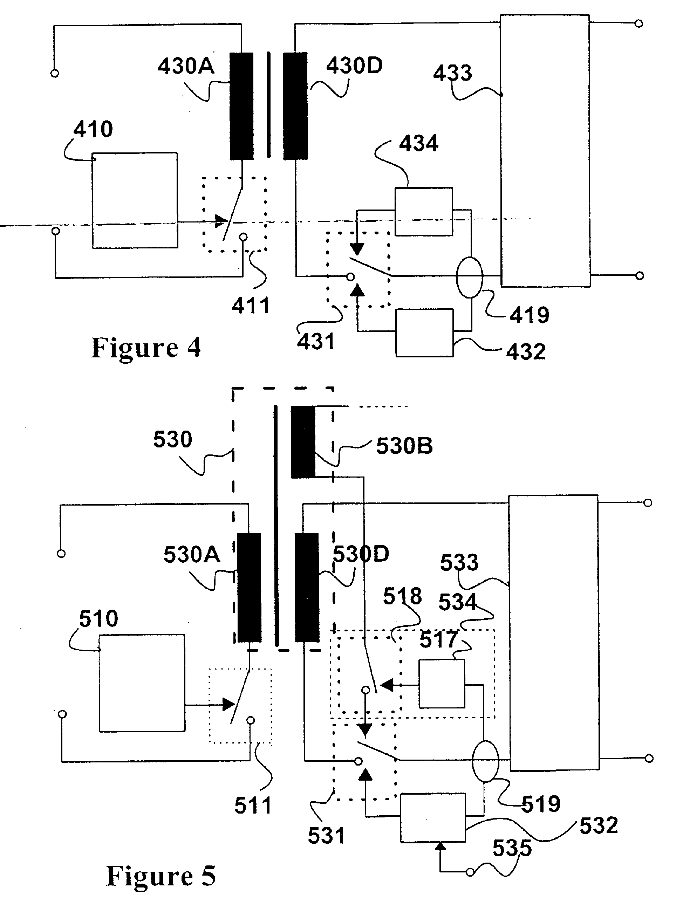

Above in conjunction with the description of the prior art reference was made to Figs. 1 to 3, so in the following description of the invention and its advantageous embodiments reference will be made mainly to Figs. 4 to 12. When describing changes in voltage, the verb "rise" will be used to refer to a change in the positive direction and the verb "drop" will be used to refer to a change in the negative direction.

Figs. 4 and 5 schematically illustrate a circuit to control a power supply according to an advantageous embodiment of the invention. For energy to be transferred from the input rails of the power supply to its output rails the windings 430A and 430D in Fig. 4, and windings 530A and 530D in Fig. 5 should constitute an entity that functions as transformer. Fig. 4 shows a switch element 411 which usually is a semiconductor switch, most often a FET. The FET is controlled by a signal generated in circuit 410. After turn-on, there flows a current through winding 430A as the switch FET 411 conducts. Consequently there appear currents and voltages in winding 430D which are determined by transformer characteristics. Switch 431 is provided for switching the secondary current on and off so that a suitable d.c. voltage can be produced at the output of the power supply through a filtering arrangement 433.

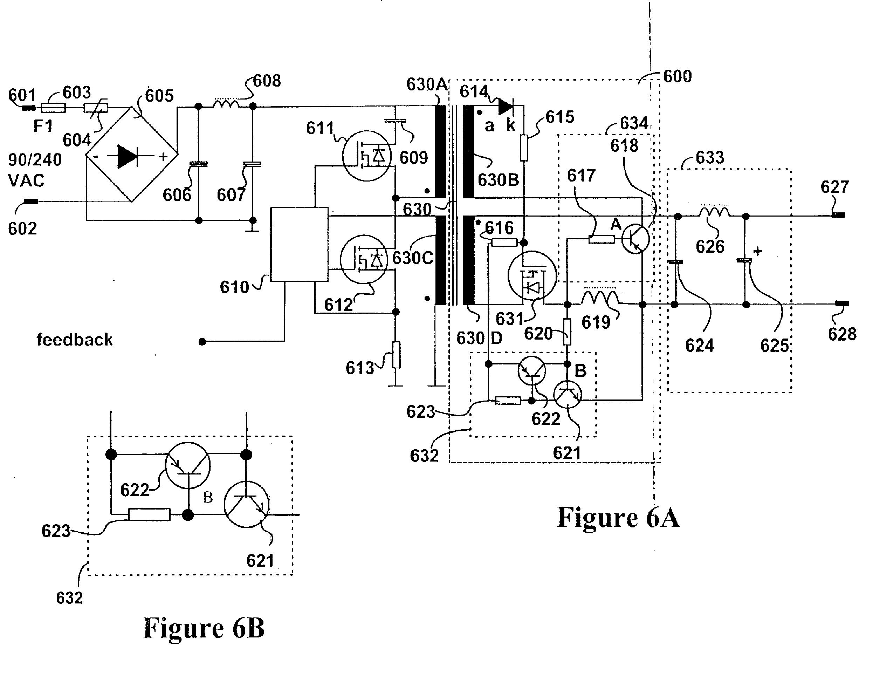

In accordance with the invention, the operation of switch 431 is controlled at least partly on the basis of a derivative measured for the secondary current. When a current flows through the secondary of the transformer a sensor element 419 produces a signal which controls circuit 434. The circuit may be very simple; e.g. in the circuit diagram of Fig. 6 this circuit comprises a switching transistor 618 and resistor 617. Circuit 434 is used to drive switch 431 into conduction. According to an embodiment of the invention the sensor element 419 includes a choke which saturates at a certain current so that a control signal can be generated by means of pulse-like voltage changes which depend on the current and are associated with said saturation of the choke.

Circuit 432 can be used to drive switch 431 back into non-conduction, which is advantageous when optimizing the length of the duty cycle of the circuit. There are switches 431 which retain their conductive state even if the control signal, which drove the switch into conduction, is turned off. One such semiconductor switch is the FET which is kept conductive by its gate charge when its gate control is turned off. To enable optimal turn-off of secondary current by switch 431 the circuit of Fig. 4 includes a switch circuit 432 which produces a signal the purpose of which is to drive switch 431 into non-conduction. When 431 is a FET, circuit 432 is used to discharge the gate charge of the FET, thereby producing the desired operation whereafter a new duty cycle may begin. Block 433 is a filtering circuit for smoothing the voltage and current.

Fig. 5 illustrates the generation of a control pulse for switch 531 by means of an auxiliary winding 530B in the transformer. As regards their functional characteristics the circuits are equivalent, and the numbered components in Fig. 5 correspond to those in Fig. 4. A principal difference is that control for switch 531 is generated by means of an auxiliary winding in the transformer. In the circuit depicted in Fig. 5, control circuit 434 of Fig. 4, which responds to the derivative measured for the secondary current, is not used to directly control the secondary current switch 531 but, instead, control is arranged for an auxiliary switch 518 included in circuit 534. Thus the voltage which drives the secondary current switch 531 to conductive state comes from the auxiliary winding 530B via the auxiliary switch 518. Block 533 is a filtering circuit provided for smoothing the voltage and current. In addition, circuit 532 may include or be connected with sensors to observe the status, e.g. the temperature, of the power supply or part thereof or that of an external device.

Fig. 6A shows a circuit for secondary rectification applying an advantageous embodiment of the invention. For power supply the circuit comprises contacts 601 and 602, connecting the circuit with an a.c. source, contact 601 being connected via a fuse 603 to a varistor 604. One contact of the varistor 604 is connected to a first a.c. input rail of a rectifier bridge 605. The a.c. contact 602 is connected direct to a second a.c. input rail of the rectifier bridge 605. A first, negative d.c. rail of the rectifier bridge 605 is connected to first, grounded ends of filtering capacitors 606 and 607. A second, positive d.c. rail of the rectifier bridge 605 is connected to a second end of the filtering capacitor 606 which is further connected to a first end of a choke 608. A second end of the choke 608 is connected to a second end of the capacitor 607 from which point there is a connection to a first end of capacitor 609 and at the same time to a first end of a primary winding 630A of transformer 630.

A second end of capacitor 609 is connected to the drain of a first FET 611. The source of the FET 611 is connected to a second end, marked by a dot in Fig. 6, of the primary winding 630A of transformer 630. The drain of a second FET 612 is connected to the source of FET 611 and, thereby, to the second end of winding 630A of transformer 630. The source of FET 612 is connected to a feedback circuit 610 as well as to ground at said connection point through a resistor 613. The gates of FETs 611 and 612 are both connected to pins of their own in circuit 610. Furthermore, a first end of a winding 630C of transformer 630 is connected to circuit 610. A second end of winding 630C is connected to ground. In addition, a feedback line is connected to circuit 610. Windings A, B, C and D in transformer 630 are galvanically isolated.

A first end (marked by a dot) of winding 630B of transformer 630 is connected to the anode of diode 614. The cathode of diode 614 is connected via resistor 615 to a point which is connected to the gate of FET 631 and to a first end of resistor 616. A second end of resistor 616 is connected to a point which is connected to a first end of resistor 623 and to the emitter of a PNP transistor 622. The base of transistor 622 is connected to the collector of an NPN transistor 621 and also to a second end of resistor 623. The base of transistor 621 is connected to the collector of transistor 622 and also to a first end of resistor 620. The emitter of the NPN transistor 621 is connected to the emitter of a PNP transistor 618 and also to a first end of a control choke 619. A second end of the choke is connected to a second end of resistor 620, to the drain of FET 631, and via resistor 617 to the base of transistor 618. The collector of transistor 618 is connected to a second end of winding 630B of transformer 630.

The source of FET 631 is connected to a second end of winding 630D of transformer 630. A first end, marked by a dot, of winding 630D is connected to a first end of capacitor 624 and to a first end of the winding of a choke 626. A second end of the winding of choke 626 is connected to a first end of capacitor 625 and to a first, positive output rail 627 of the apparatus. Second ends of capacitors 624 and 626 are connected to a coupling point which is connected to the emitters of both transistors 618 and 621 as well as the first end of the winding of control choke 619. The same point is galvanically coupled with a second output rail of the apparatus.

Functionally, the circuit of Fig. 6A implements a rectifier circuit based on a rectifier bridge, comprising components 601, 602, 603, 604 and 605 as well as the filtering element consisting of a choke 608 and capacitors 606 and 607. The purpose of circuit 610 is to shape the signal coming from the feedback line suitable for power control by FETs 611 and 612. The actual control circuit is enclosed by a rectangle 600 drawn in dashed line. The control circuit includes, among others, an element consisting of transistors 622 and 621 and resistor 627, which element essentially corresponds to a thyristor as far as its operation is concerned. The entity comprised of these components is enclosed by a rectangle 632 drawn in dashed line.

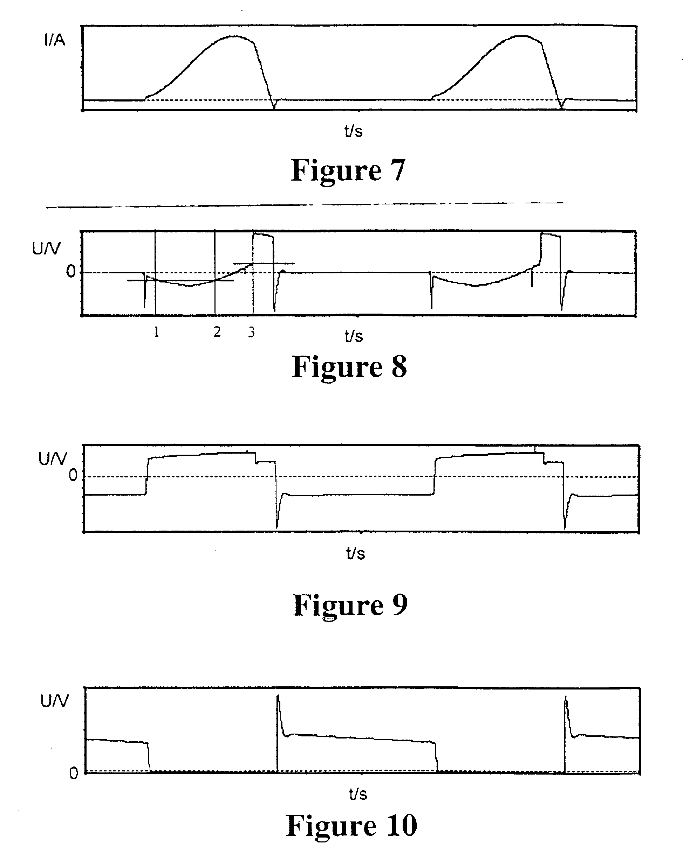

Fig. 7 shows the secondary current of the circuit of Fig. 6A as a function of time. Initially the secondary current flows through the body diode of FET 631. The current produces across choke 619 a variable voltage proportional to the derivative of the current, which voltage is shown as a function of time in Fig. 8. To help understand the operation of the circuit, Fig. 8 also shows some essential moments of time the substantial correspondence of which with other essential quantities with respect to the circuit can be understood through reference to the other figures, Figs. 7 to 11.

At moment 1 in Fig. 8, the base voltage of the PNP transistor 618 drops below -0.6 V whereby the transistor is turned on and the auxiliary winding 630B feeds control voltage to the gate of FET 631. The current commutes from the body diode to the FET. At moment 2 the base voltage of the PNP transistor rises above -0.6 V and the transistor switches off the control voltage coming from the auxiliary winding 630B. Gate charge, however, keeps FET 631 conductive. At moment 3 the voltage of the control choke has been reversed and the base voltage of thyristor 632 rises above 0.6 V, whereby the thyristor element 632 is triggered conductive. The FET gate charge is discharged at a rate determined by a time constant depending on the delay resistor and gate capacitance. As the gate voltage drops below the threshold voltage the current through the FET is switched off whereby the current commutes to the body diode of the FET.

For reasons related to choke dimensions, FET 631 is not controlled at small secondary currents but the body diode is utilized for rectification. Therefore, transistor 618 turns the circuit off at small currents. Moreover, the PNP transistor 618 is advantageous in reducing control circuit losses. It prevents current flow through the control circuit when thyristor 632 is conducting and a voltage pulse arrives from the auxiliary winding 630B, which would occur after moment 3 in Fig. 6.

Fig. 7 shows the current through the control choke in a circuit according to Fig. 6 during two half-waves. When the drain voltage of the primary main FET is switched on, the current through the control choke starts to increase according to Fig. 7 as a function of time. As the current through the control choke increases, the voltage across the choke 619 also changes as a function of time (Fig. 8).

Fig. 8 shows the voltage across the control choke 619 as a function of time. At moment 1 the voltage has dropped below -0.6 V which is the threshold voltage of the PNP transistor 618. At that point the transistor turns on, and a control voltage is brought via the auxiliary winding 630B to the gate of FET 631. The current commutes to the body diode. In between moments 1 and 2 transistor 620 is open and FET 631 receives a control signal. The secondary current through the control choke reaches its maximum value, as does the absolute value of the voltage measured across the control choke. Subsequent to the maximum value, the current through the control choke decreases, as does the absolute value of the voltage measured across the control choke. At moment 2, the voltage across the choke 619 has risen above -0.6 V, whereby transistor 620 closes and the voltage brought from the auxiliary winding 630B to the gate of FET 631 is switched off. Gate charge, however, keeps FET 631 conductive.

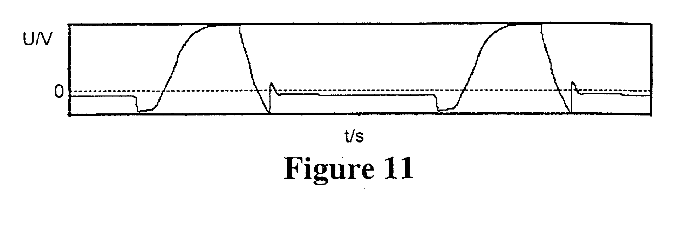

Fig. 9 shows how the secondary current of transformer 630 changes as a function of time. Figs. 10 and 11 show similarly how the voltage measured across the secondary FET 630 and the gate control pulse depend on time and also their phases in reference to the secondary voltage of the transformer.

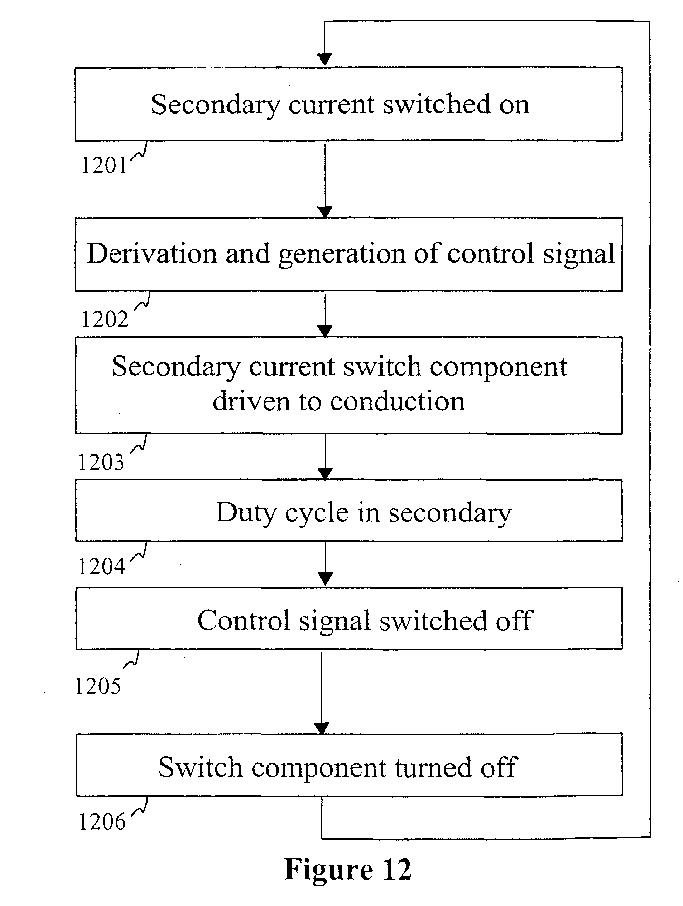

Fig. 12 shows a diagram of a control method according to an advantageous embodiment of the invention where a power supply according to Fig. 6 based on synchronous secondary rectification can be controlled on the basis of the current flowing through a choke 619. In an advantageous embodiment of the invention a control signal is generated 1202 when the secondary current has been switched on 1201. A switch component is driven conductive 1203, during which conduction the duty cycle of the circuit takes place 1204. After that, the control signal is switched off and the switch component is driven non-conductive 1205. When the switch component 631 is a FET, the driving into non-conduction means that the gate charge is discharged 1205. The switch component 631 is turned off 1206 in order to reduce power loss.

On the basis of the embodiments disclosed here a person skilled in the art can apply the principles of the invention to produce control signals for other kinds of circuit as well. Then the selection of the reference quantity for the control of the circuit in question depends on the actual control element. Moreover, it is possible to apply the circuit shown in Fig. 6 in its advantageous embodiments in such a manner that the choke 619 is replaced by an equivalent circuit to generate a control signal. In that case, the generation of a control signal on the basis of a quantity essential to the operation of an apparatus can be realized using an electric circuit that produces a voltage proportional to the controlling quantity and/or a first time derivative of said quantity. It is also possible to use a current-voltage or frequency-voltage converter circuit implemented with semiconductors to produce a signal which depends on secondary current variation, whereby these semiconductor circuits may comprise a differentiating circuit. In that case the number of components and the extra costs induced by them may be more disadvantageous than in the preferred embodiment of the invention described above. Furthermore, it is obvious to a person skilled in the art that a control signal can be produced using higher derivatives related to the change in the controlling quantity.

A person skilled in the art can routinely alter the power supply described above such that it operates on the opposite polarity. Moreover, on the basis of the invention it is obvious to one skilled in the art that secondary current can be measured by integrating the time derivative of the secondary current and, thus, the choke may also be used as a sensor for an auxiliary current meter.

## Claims

1. A power supply comprising
- a primary and a secondary
- in the secondary, a controllable switch component (531) for controllably switching the secondary current on and off, and
- a first control circuit (534) for controlling said switch component (531)
**characterized in that** it comprises a means (517), (518), (519) for producing a signal dependent on the change of the secondary current, said means being connected to said first control circuit (534), and said means comprising means (519) for producing a signal proportional to a certain time derivative of the secondary current.

2. A power supply according to claim 1, **characterized in that** said means (519) for producing a signal proportional to a time derivative of the secondary current comprises an inductance connected in series with respect to the secondary current.

3. A power supply according to claim 2, **characterized in that** said inductance is provided by a saturable choke.

4. A power supply according to claim 1, **characterized in that** it comprises a second control circuit (532) for controlling said switch component (531) whereby the first control circuit (534) is adapted so as to drive the switch component (531) into a conductive state and the second control circuit (532) is adapted so as to drive the switch component (531) into a non-conductive state.

5. A power supply according to claim 4, **characterized in that** said means (519) for producing a signal dependent on the change of the secondary current is connected to said second control circuit (532).

6. A power supply according to claim 4, **characterized in that** it comprises a means (535) for coupling an external control signal to the second control circuit (532).

7. A power supply according to claim 4, **characterized in that** said second control circuit (532) comprises a semiconductor switch.

8. A power supply according to claim 7, **characterized in that** said second control circuit (532) comprises a means for controlling the semiconductor switch (531) with a control signal dependent on the secondary current.

9. A power supply according to claim 7, **characterized in that** said second control circuit (532) comprises a temperature sensor.

10. A power supply according to claim 1, **characterized in that** it comprises a transformer (530) and therein an auxiliary winding (530B), and said first control circuit (534) is adapted so as to couple a signal from the auxiliary winding (530B) to said switch component (531) in order to drive the switch component (531) into a conductive state.

11. A power supply according to claim 1, **characterized in that** said first control circuit (534) comprises a semiconductor switch.

12. A power supply according to claim 11, **characterized in that** said first control circuit (534) comprises a means (518), (517) for controlling said semiconductor switch (531) with a control signal dependent on the secondary current.

13. A power supply according to claim 1, **characterized in that** said means (519) for producing a signal dependent on the change of the secondary current comprises a Hall sensor.

14. A power supply according to claim 1, **characterized in that** said means (519) for producing a signal dependent on the change of the secondary current comprises a transformer winding.

15. A method for switching a secondary current in a secondary rectifier, **characterized in that**
- a first control signal is produced which is dependent on a time derivative of the secondary current
- as a response to the first control signal a certain switch component (531) switching the secondary current is driven into a conductive state.

16. A method according to claim 15, **characterized in that**
- a second control signal is produced which is dependent on a time derivative of the secondary current
- the length of the conduction time of said switch component (531) is limited by driving said switch component into a non-conductive state as a response to the second control signal.

## Patentansprüche

1. eine Stromversorgung, umfassend
- eine Primärwicklung und eine Sekundärwicklung
- eine steuerbare Schalterkomponente (531) in der Sekundärwicklung, um den Sekundärstrom steuerbar ein- und auszuschalten und
- eine erste Steuerschaltung (534), um die Schaltungseinheit (531) zu steuern
**dadurch gekennzeichnet, dass** sie ein Mittel (517), (518), (519) zur Erzeugung eines Signals, das von der Veränderung des Sekundärstroms abhängt, umfasst, und dieses Mittel mit der ersten Steuerschaltung (534) verbunden ist, und dieses Mittel Mittel (519) zur Erzeugung eines Signals das proportional zu einer zeitlichen Ableitung des Sekundärstroms ist, umfasst.

2. Stromversorgung nach Anspruch 1, **dadurch gekennzeichnet dass** das Mittel (519) zur Erzeugung eines Signals, das proportional zu einer zeitlichen Ableitung des Sekundärstroms ist, eine Induktivität die seriell zum Sekundärstrom angeschlossen ist, umfasst.

3. Stromversorgung nach Anspruch 2, **dadurch gekennzeichnet dass** die Induktivität durch eine sättigungsfähige Spule vorgesehen ist.

4. Stromversorgung nach Anspruch 1, **dadurch gekennzeichnet dass** sie eine zweite Steuerschaltung (532) zur Steuerung der Schalterkomponente (531) umfasst, wobei die erste Steuerschaltung (534) so angepasst ist dass sie die Schalterkomponente (531) in einen leitenden Zustand überführt und die zweite Steuerschaltung (532) so angepasst ist dass sie die Schalterkomponente (531) in einen nichtleitenden Zustand überführt.

5. Stromversorgung nach Anspruch 4, **dadurch gekennzeichnet dass** das Mittel (519) zur Erzeugung eines Signals, das abhängig von der Änderung des Sekundärstroms ist, mit der zweiten Steuerschaltung (532) verbunden ist.

6. Stromversorgung nach Anspruch 4, **dadurch gekennzeichnet dass** sie ein Mittel (535) zur Kopplung eines externen Steuersignals mit der zweiten Steuerschaltung (532) umfasst.

7. Stromversorgung nach Anspruch 4, **dadurch gekennzeichnet dass** die zweite Steuerschaltung (532) einen Halbleiterschalter umfasst.

8. Stromversorgung nach Anspruch 7, **dadurch gekennzeichnet dass** die zweite Steuerschaltung (532) ein Mittel zur Steuerung der Halbleiterschaltung (531) mit einem Steuersignal, das von dem Sekundärstrom abhängt, umfasst.

9. Stromversorgung nach Anspruch 7, **dadurch gekennzeichnet dass** die zweite Steuerschaltung (532) einen Temperatursensor umfasst.

10. Stromversorgung nach Anspruch 1, **dadurch gekennzeichnet dass** sie einen Transformator (530) und darin eine Hilfswicklung (530B) umfasst, und die erste Steuerschaltung (534) so angepasst ist dass sie ein Signal der Hilfswicklung (530B) mit der Schaltungskomponente (531) koppelt, um die Schaltungseinheit (531) in einen leitenden Zustand zu überführen.

11. Stromversorgung nach Anspruch 1, **dadurch gekennzeichnet dass** die erste Steuerschaltung (534) einen Halbleiterschalter umfasst.

12. Stromversorgung nach Anspruch 11, **dadurch gekennzeichnet dass** die erste Steuerschaltung (534) ein Mittel (518), (517) zur Steuerung des Halbleiterschalters (531) mit einem Steuersignal umfasst, das von dem Sekundärstrom abhängt.

13. Stromversorgung nach Anspruch 1, **dadurch gekennzeichnet dass** das Mittel (519) zur Erzeugung eines Signals, das von der Änderung des Sekundärstroms abhängt, einen Hall-Sensor umfasst.

14. Stromversorgung nach Anspruch 1, **dadurch gekennzeichnet dass** das Mittel (519) zur Erzeugung eines Signals, das von der Änderung des Sekundärstroms abhängt, eine Transformatorwicklung umfasst.

15. Verfahren zum Schalten eines Sekundärstroms in einem Sekundärgleichrichter, **dadurch gekennzeichnet dass**
- ein erstes Steuersignal erzeugt wird, das von einer zeitlichen Ableitung des Sekundärstroms abhängt
- als Reaktion auf das erste Steuersignal eine bestimmte Schalterkomponente (531), die den Sekundärstrom schaltet, in einen leitenden Zustand überführt wird.

16. Verfahren nach Anspruch 15, **dadurch gekennzeichnet dass**
- ein zweites Steuersignal erzeugt wird, das von einer zeitlichen Ableitung des Sekundärstroms abhängt
- die Länge der Leitungszeit der Schalterkomponente(531) dadurch begrenzt wird, dass die Schalterkomponente als Reaktion auf das zweite Steuersignal in einen nichtleitenden Zustand überführt wird.

## Revendications

1. Alimentation électrique comprenant :
- un primaire et un secondaire
- dans le secondaire, un composant de commutation pouvant être commandé (531) pour commuter à la commande le courant secondaire à l'état de marche et à l'état d'arrêt, et
- un premier circuit de commande (534) pour commander ledit composant de commutation (531)
**caractérisée en ce qu'**elle comporte des moyens (517), (518), (519) pour produire un signal dépendant de la variation du courant secondaire, lesdits moyens étant connectés au dit premier circuit de commande (534) et lesdits moyens comportant des moyens (519) pour produire un signal proportionnel à un certaine dérivée par rapport au temps du courant secondaire.

2. Alimentation électrique selon la revendication 1, **caractérisée en ce que** lesdits moyens (519) pour produire un signal proportionnel à une dérivée par rapport au temps du courant secondaire comporte une inductance connectée en série par rapport au courant secondaire.

3. Alimentation électrique selon la revendication 2, **caractérisée en ce que** ladite inductance est fournie par une bobine d'arrêt saturable.

4. Alimentation électrique selon la revendication 1, **caractérisée en ce qu'**il comporte un second circuit de commande (532) permettant de commander ledit composant de commutation (531) de sorte que le premier circuit de commande (534) soit adapté de façon à entraîner le composant de commutation (531) à l'état conducteur et que le second circuit de commande (532) soit adapté de façon à entraîner le composant de commutation (531) dans un état non conducteur.

5. Alimentation électrique selon la revendication 4, **caractérisée en ce que** lesdits moyens (519) pour produire un signal dépendant de la variation du courant secondaire sont connectés au dit second circuit de commande (532).

6. Alimentation électrique selon la revendication 4, **caractérisée en ce qu'**il comporte des moyens (535) pour coupler un signal de commande externe au second circuit de commande (532).

7. Alimentation électrique selon la revendication 4, **caractérisée en ce que** ledit second circuit de commande (532) comprend un commutateur à semi-conducteur.

8. Alimentation électrique selon la revendication 7, **caractérisée en ce que** ledit second circuit de commande (532) comporte des moyens pour commander le commutateur à semi-conducteur (531) avec un signal de commande dépendant du courant secondaire.

9. Alimentation électrique selon la revendication 7, **caractérisée en ce que** ledit second circuit de commande (532) comporte un capteur de température.

10. Alimentation électrique selon la revendication 1, **caractérisée en ce qu'**elle comprend un transformateur (530) et à l'intérieur un enroulement auxiliaire (530B), et **en ce que** ledit premier circuit de commande (534) est adapté de façon à coupler un signal provenant de l'enroulement auxiliaire (530B) au dit composant de commutation (531) afin d'entraîner le composant de commutation (531) dans un état conducteur.

11. Alimentation électrique selon la revendication 1, caractérisée en ce ledit premier circuit de commande (534) comporte un commutateur à semi-conducteur.

12. Alimentation électrique selon la revendication 1, caractérisée en ce ledit premier circuit de commande (534) comporte des moyens (518), (517) destinés à commander ledit commutateur à semi-conducteur (531) avec un signal de commande dépendant du courant secondaire.

13. Alimentation électrique selon la revendication 1, **caractérisée en ce que** lesdits moyens (519) permettant de produire un signal dépendant de la variation du courant secondaire comportent un capteur à effet Hall.

14. Alimentation électrique selon la revendication 1, **caractérisée en ce que** lesdits moyens (519) permettant de produire un signal dépendant de la variation du courant secondaire comportent un enroulement de transformateur.

15. Procédé permettant de commuter un courant secondaire dans un redresseur secondaire, **caractérisé en ce que**
- un premier signal de commande est produit, lequel est dépendant de la dérivée par rapport au temps du courant secondaire,
- en réponse au premier signal de commande un certain composant de commutation (531) commutant le courant secondaire est entraîné à l'état conducteur.

16. Procédé selon la revendication 15, **caractérisé en ce que**
- un second signal de commande est produit, lequel est dépendant de la dérivée par rapport au temps du courant secondaire
- la longueur du temps de conduction dudit composant de commutation (531) est limitée en entraînant ledit composant de commutation dans un état non conducteur en réponse au second signal de commande.
